# EUROPEAN PATENT APPLICATION

(11) **EP 0 955 249 A2**
(43) Date of publication of application: **10.11.1999**
(21) Application number: 99660066.4
(22) Date of filing: 26.04.1999
(51) Int. Cl.: B65D 88/12

(54) **Multi-use cargo space for transporting bulk material**

(30) Priority: 04.05.1998 FI 980987
(71) Applicant: VR Osakeyhtiö, 00101 Helsinki (FI); Honkonen, Markku, 76100 Pieksämäki (FI)
(72) Inventor: Honkonen, Markku, 76100 Pieksämäki (FI)
(74) Representative: Hovi, Simo

(57) **Abstract**

The present invention relates to a multiuse cargo space suitable for use as a permanently mounted or portable cargo compartment in railroad cars, trucks and other vehicles and further to a method for utilizing such a cargo space in the transport and unloading of granular bulk material. Said cargo space comprises a frame body having corner structures (3) capable of serving as a support structure and at least one space (4) suitable for receiving a load. Said cargo space houses at least one cargo compartment (18) and at least one pivot point (19) for connecting said cargo compartment (18) to said frame structure, said pivot point (5,6) being located at the upper part of said cargo compartment (18) and disposed at a distance from the central line of said cargo space not smaller than the distance of the center of gravity of said cargo compartment (18) from the central plane of said cargo space.

## Description

The invention relates to a multi-use cargo space according to the preamble of claim 1 suitable for use as a permanently mounted or detachable cargo compartment in railroad cars, trucks and other vehicles.

The invention also concerns a method according to claim 8 for loading, transporting and unloading bulk material such as gravel, crushed rock, chips or cereal by means of the cargo space according to the invention.

In the known methods, cargo containers, haul beds or cars are loaded from above and unloaded either by tipping or via opening a side or tail gate. Some constructions aim to ease unloading of flowable material such as grain by means of fixed or flipping ramps made to the floor of the cargo container.

Automation of loading and unloading has been attempted in a great number of such embodiments. Cargo containers with different kinds of opening arrangements have been disclosed among others in the following patent publications: GB 2,138,408, DE 2,134,426, DK 95 00118, SE 456 495 and SE 452 738. Generally, the high external actuating force needed in the different dumping, tipping and lift arrangements becomes problematic to implement. Furthermore, opening cargo compartments having a hatch cover that rises upward requires a plenty of free space above compartment or is otherwise a clumsy operation when weather conditions are adverse due to snow, ice or wind, for instance. Due to its mechanical complexity and other reasons, as well, a hatch cover adapted to open by folding, rolling or telescopingly is often a disadvantageous solution, particularly in difficult operating conditions.

These types of hatch cover arrangements are also hampered by sealing and wear problems. Moreover, the mechanical structures of cargo compartments are easily damaged if the loading and/or unloading must be carried out using trucks, bucket loaders, grabbers or magnets. In conventional sliding door and hatch cover embodiments, the maximum opening length of the compartment hatch is generally limited to half or two-thirds of the overall length of the cargo space.

For commercial transport, the dimensions of the cargo space must comply with various sandards and regulations that set constraints to the shape, loading and unloading of a conventional cargo compartment. When compartment constructions of the known art are modified to serve as accommodation, office or storage spaces, the maximum allowable width becomes a limiting factor to an efficient use of the spaces.

It is an object of the present invention to overcome the disadvantages of conventional techniques and to provide an entirely novel type of method for modifying the cargo space of a transport system vehicle or a portable container.

The goal of the invention is attained by arranging the empty cargo compartments to be rotatable supported by a lower hinge means from their transport position into their loading position with the help of an external force, whereby with the release of the locking of an upper hinge means, the loaded cargo compartment are arranged to be entirely, or alternatively, almost entirely gravitationally closing supported by said lower hinge means into their transport position, in which position also said upper hinge means will be locked; subsequently, the loaded cargo compartments are arranged to be entirely, or alternatively, almost entirely gravitationally opening supported by said upper hinge means into their unloading position when the locking of said lower hinge means is unlocked, and the empty cargo compartments are arranged to close under an external actuating force back into their transport positions in which said locking of said lower hinge means is locked.

More specifically, the cargo space according to the invention is characterized by what is stated in the characterizing part of claim 1.

Furthermore, the method according to the invention is characterized by what is stated in the characterizing part of claim 8.

The invention offers significant benefits.

By virtue of the invention, cargo handling can be made easier and, moreover, loading from above is possible even if the hatch cover proper used during the transport is actually of a permanently mounted type. Loading and unloading can be performed in railroad transportation also under a live trolley wire, because the hatch cover area remaining under the trolley wire is comprised of a solid roof structure having a constant height over its entire length. The invention makes it possible to configure a transport system that receives the cargo from automatic topside loading equipment such as band conveyors or silos, transfers the cargo to the receiver and there quickly unloads the cargo from the bottom part of the cargo space, e.g., onto the band conveyors or into the silos of the receiver.

Due to the solid roof, operating disturbances due to snow and ice are avoided and a roof of light weight and good insulation properties can be constructed. Under the solid roof, the walls of the cargo space can be sealed tightly and no sliding seal surfaces are needed as is required in a telescoping hatch cover, for instance.

The cargo space can also be easily loaded from above with goods having a length equal to that of the cargo space and, respectively, unloaded from below.

Furthermore, the invention can be employed for improving the efficiency of container space utilization when the container is used, e.g., as a portable accommodation, office or storage space. The arrangement according to the invention makes it possible to provide an almost two-fold width of the accommodation space compared with that needed during container transport. The application permits the adaptation of, e.g., portable containers into sanitary spaces or other accommodation facilities for use in different types of distress situations. Also the useability of different accommodation spaces can be exploited more fully through transferring such a container space, e.g., during wintertime close to a skiing center and during summertime on a camping site.

In the following the invention will be examined in greater detail with the help of exemplifying embodiments by making reference to the appended drawings in which
Figure 1 shows an end view of an embodiment of the multiuse cargo space according to the invention, herein opened for loading;
Figure 2 shows a side view of the multiuse cargo space according to the invention, herein opened for loading;
Figure 3 shows an end view of the multiuse cargo space according to the invention, herein closed for transport;
Figure 4 shows a side view of the multiuse cargo space according to the invention, herein closed for transport;
Figure 5 shows an end view of the multiuse cargo space according to the invention, herein opened for unloading;
Figure 6 shows a side view of the multiuse cargo space according to the invention, herein opened for unloading;
Figure 7 shows an end view of a second embodiment of the cargo space according to the invention, herein locked into its load/transport position;
Figure 8 shows an end view of the second embodiment of the cargo space according to the invention, herein locked into its unload position;
Figure 9 shows an end view of a third embodiment of the cargo space according to the invention suited for use as an accommodation and office space, herein locked into its transport position;
Figure 10 shows a side view of the third embodiment of the cargo space according to the invention suited for use as an accommodation and office space, herein locked into its transport position;
Figure 11 shows an end view of the third embodiment of the cargo space according to the invention suited for use as an accommodation and office space, herein locked into its opened position; and
Figure 12 shows a side view of the third embodiment of the cargo space according to the invention suited for use as an accommodation and office space, herein locked into its opened position.

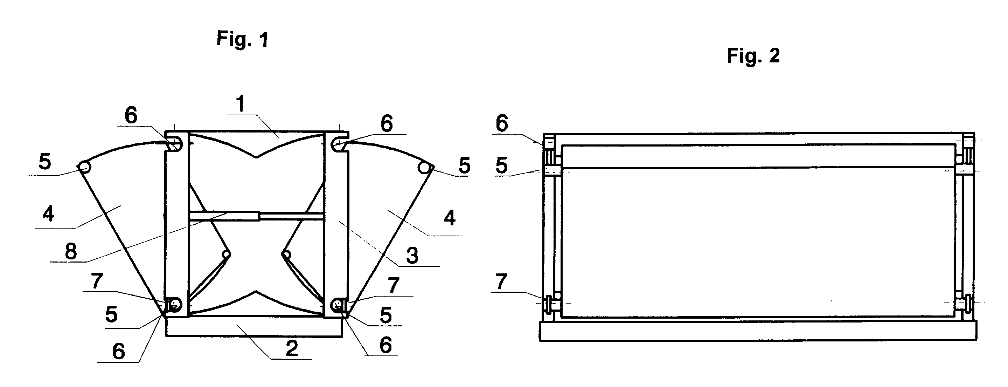

In the most advantageous embodiment of the invention shown in Fig. 1, the cargo space comprises two separate cargo compartments 4, either of them having separate walls and bottom but sharing a common roof 1 of a solid construction. The bottom opening of either cargo compartment is provided with a cover 9 hingedly supported at its long inside edge 10. The cargo compartments are hingedly supported at both their upper and lower outside corners. The pivot points are formed by pivot pins 5 attached to the cargo compartments and by sliding surfaces 6 of the corner posts cooperating with said pins.

The loading of the separate cargo compartments takes place via both sides of the roof 1 of the cargo space after the cargo compartments 4 are tilted outward aside supported by the lower hinge means of the cargo compartments in the manner shown in Fig. 1. The cargo compartments 4 can be opened into this position after the locking of the upper corner hinge means 7 is released. The bottom opening cover 9 is locked closed in the loading position of the compartment. After loading, the return of the cargo compartments 4 into their transport position requires no external actuating force if the center of gravity of the loaded cargo compartments is kept offset toward the inside direction from the vertical line running through the lower pivot points.

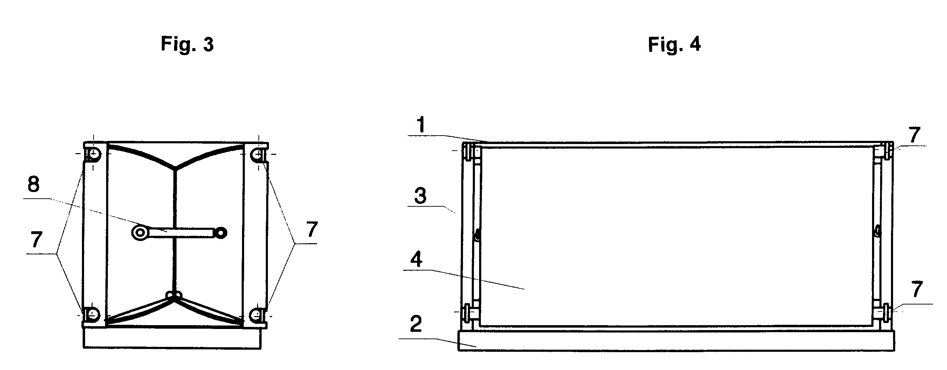

For the duration of a transport, the separate cargo compartments 4 are closed into the position shown in Figs. 3 and 4, and the upper 5 and the lower hinge means 6 are locked. In this position, the external dimensions of the cargo space are compatible with the standards applicable in the art. The roof 1 protects the cargo being transported from rain, snow and ice. The bottom opening cover 9 is kept locked closed.

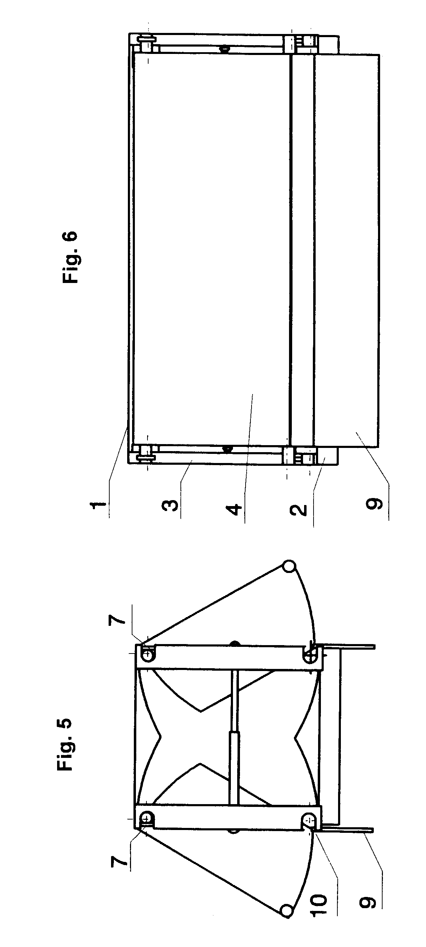

For unloading the separate cargo compartments 4 are tilted into the position shown in Figs. 5 and 6. Herein, the upper hinge means 5/6 with their locking 7 kept closed act as the pivot points. The locking of the lower hinge means 7 is kept open. Pivoting about the hinges 10, the bottom opening covers 9 open automatically when the cargo compartments 4 are tilted into their unloading positions.

Next, the unloaded cargo compartments 4 are rotated back into their transport position (Figs. 3 and 4) for return to their loading site. By the same token, the bottom opening covers 9 are closed automatically into their locked positions.

The movements of the loaded cargo compartments, that is, the movement of the filled compartments from their loading position (Figs. 1 and 2) into their transport position (Figs. 3 and 4) and further from their transport position into their unloading position (Figs. 5 and 6) occurs chiefly by gravitation. The possibly required additional force for actuation is small due to the advantageous positioning of the pivot points. The back-tilting of the empty cargo compartments requires external force that may be provided by, e.g., a hydraulic or pneumatic cylinder 8. The mechanical construction thereof may be, e.g., similar to a door closer that can be controlled by valves. As is obvious to a person versed in the art, any other suitable method can be applied advantageously for rotating the compartments without departing from the scope and spirit of the invention.

The bottoms of the cargo compartments are shaped so that easy emptying of the compartments results. Moreover, the same smoothly upward rounded bottom shape also facilitates the supporting of the bottom by means of rollers or longer rolls without hampering the rotational movement of the cargo compartments.

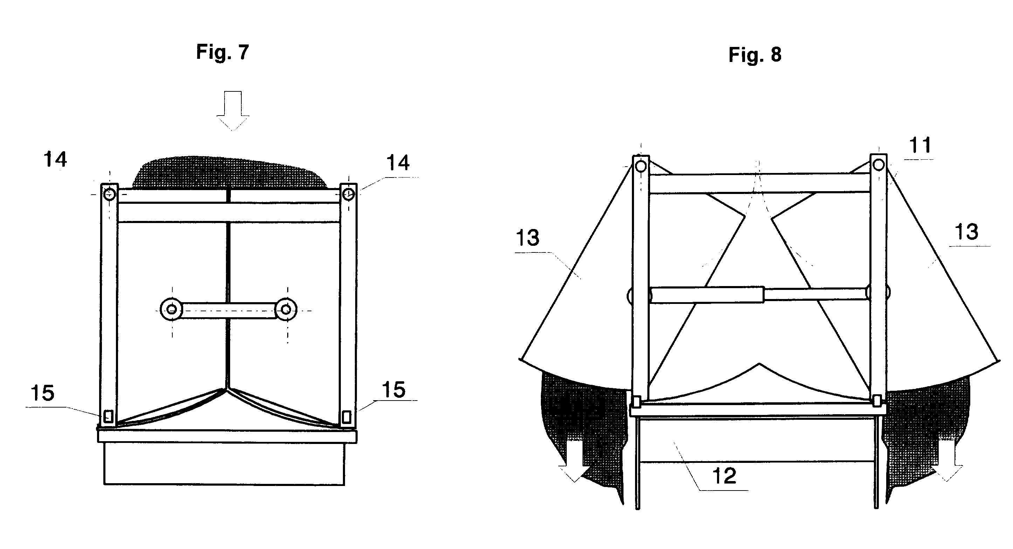

In the second embodiment of the invention shown in Figs. 7 and 8, the cargo compartments are pivotally hinged only by their upper corners 14. As the cargo space has no solid roof, this embodiment is best applicable to transport of materials that do not need any protection to the material during transport. Such material transports include, e.g., the transport of gravel and crushed rock required in railroad track constructions. For the duration of loading and unloading, the cargo compartments are locked in place by means of a locking device 15. Loading takes place directly from above the cargo compartment. For unloading, the locking device 15 is released, whereby the cargo compartments can tilt supported by the upper hinge means 14 past the solid floor 12 outward aside by gravitation. The bottom opening cover arrangement is similar to that used in most advantageous embodiment. The empty cargo compartments are tilted back into their transport/loading position, e.g., by means of an actuator cylinder 8. During loading and transport, the locking device 15 is kept locked.

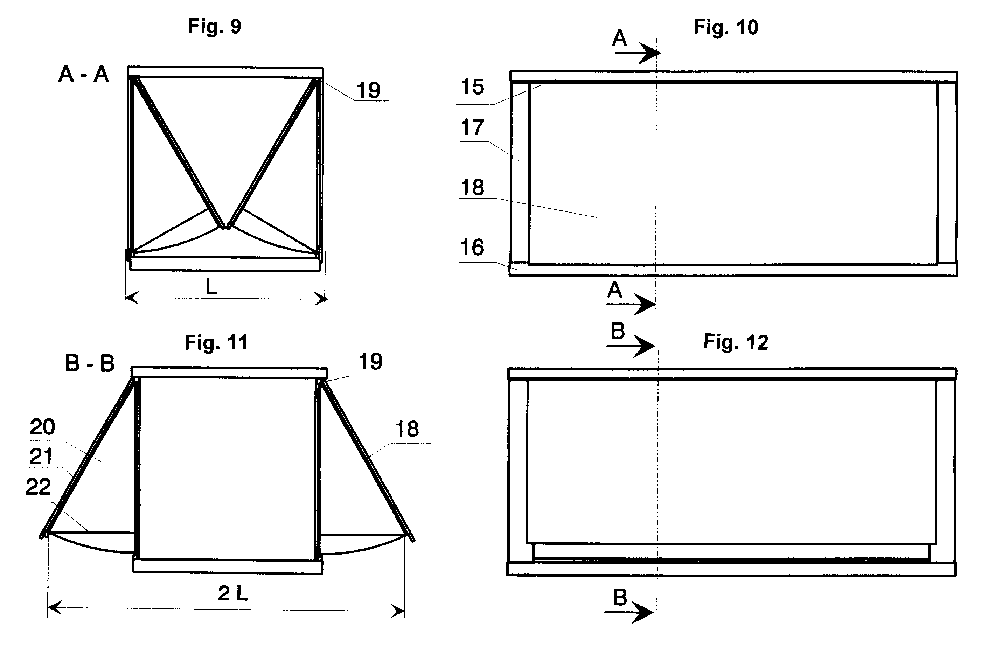

The third embodiment of the invention is shown in Figs. 9 - 12 that illustrate the utilization of the invention as applied to an accommodation, office or storage space compartment. Herein, the compartment is designed into a containerized unit comprising a roof 15, a floor 16 and end walls 17 as well as two collapsible spaces 18 of a longitudinally triangular cross section. Supported by a hinge 19, the collapsible triangular space can be tilted between a transport position (Figs. 9 and 10) and a service position (Figs. 11 and 12). The collapsible triangular spaces are formed by end walls 20 of a triangular shape, an outer wall 21 serving in the service position of the unit as a roof overhang and an elevated floor 22 suitable for serving as, e.g., the platform of a bed or a sitting bench. In the direction toward the interior of the compartment, the collapsible space is open and provides in its service position at its lower part an almost two-fold floor area as compared to that of the compartment in its transport position. Moreover, the use of the triangular collapsible spaces can be made extremely light and swift because of the curved underside shape of the floor section of the triangular space compartments that eliminates all hard-to-seal surfaces from the construction. The underside of the floor section must be so shaped that it fills the gap between the floor section 22 and the floor proper of the cargo compartment when the triangular collapsible space is rotated into its open position. Most advantageously, however, herein is used such a curved shape whose radius of curvature is equal to that of a circular segment drawn using the pivot point 19 as the center, whereby said gap remains sealed during the entire rotational movement of the wall 21. While the walls of such a collapsible compartment can be moved manually, the modular space can as well be equipped with an actuator that makes the movement easier.

In addition to those described above, the invention may have alternative embodiments.

A cargo compartment must have at least three walls: one first wall on the side of the cargo space, conventionally forming the long side thereof, and two other walls perpendicular to the first one and conventionally aligned parallel to the end walls of the cargo space. In addition to these, it is possible to use other intermediary walls, e.g., partitions that divide the compartment into a plurality of subcompartments. The latter type of embodiment can serve as, e.g., a collection bin for sorted materials of different kinds. While the pivot points of the cargo space are advantageously placed at the corners of the cargo space frame structure and the compartments, the trajectory of the compartment movement can be varied if so required by shifting the pivot points from these locations slightly closer to the central line of the cargo space, or respectively, upward or downward when there is a need for a different kind of trajectory. Obviously, a single unitary cargo space can be provided with a plurality of separate, adjacent compartments.

## Claims

1. Multi-use cargo space suitable for use as a permanently mounted or portable cargo compartment in railroad cars, trucks and other vehicles, the cargo space comprising a frame body having corner structures (3) capable of serving as a support structure and, located essentially inside said frame structure and having at least one side movable with regard to said frame structure, at least one space (4) suitable for receiving a load, **characterized** by
- at least one cargo compartment (18) comprising at least one first wall (21) parallel to a first wall of said cargo space and at least two second walls (20) parallel to a second wall of said cargo space, and
- at least one pivot point (19) for connecting said cargo compartment (18) to said frame structure, said pivot point (5, 6) being located at the upper part of said cargo compartment (18) and disposed at a distance from the central line of said cargo space not smaller than the distance of the center of gravity of said cargo compartment (18) from the central plane of said cargo space.

2. Multi-use cargo space according to claim 1, **characterized** by at least one actuator means (8) for rotating said cargo compartments (18) supported by at least one of said pivot points (5, 6).

3. Multi-use cargo space according to claim 2, **characterized** by at least two cargo compartments (18) adapted to both sides from said central plane of said cargo space, said cargo compartments including a second first wall for forming a four-wall closed cargo compartment (18), wherein said second first wall of the compartment is aligned parallel to said first wall of said cargo space.

4. Multi-use cargo space according to claim 2 or 3, **characterized** by
- a second pivot point (5, 6), located at the lower part of said cargo compartment (18) and disposed at a distance from the central line of said cargo space not smaller than the distance of the center of gravity of said cargo compartment (18) from the central line of said cargo space, and
- locking means (7) for controllable locking/unlocking of said first and said second pivot point (5, 6) thus facilitating the tilting of said cargo compartment (18) alternatively between a loading position and an unloading position respectively about either of said pivot points (5, 6).

5. Multi-use cargo space according to claim 1, **characterized** by a floor plane (22) disposed at the bottom of said cargo compartment (18) so as to join said first compartment wall (21) aligned parallel to said first wall of said cargo space with said second walls (20) aligned parallel to said second walls of said cargo space.

6. Multi-use cargo space according to claim 5, **characterized** by a curved bottom section adapted below said floor plane (22), said curved bottom section serving to seal the gap between said floor plane (22) and said cargo space during the movement of said cargo compartment.

7. Multi-use cargo space according to claim 4, **characterized** by a bottom opening cover (9) capable of closing the bottom of said cargo compartment (18) and adapted to open automatically when said cargo compartment (18) is tilted into its unloading position and, respectively to close automatically when said cargo compartment (18) is tilted into its transport or loading position.

8. Method for loading, transporting and unloading materials using a purpose-designed cargo space, **characterized** in that
- at least one cargo compartment (18) adapted into said cargo space is filled from above by the material to be loaded,
- said cargo space with the material therein is transported to the designated unloading site, and
- said cargo compartment (18) is tilted about a pivot point (5, 6) located at the upper part of said cargo compartment (18) and disposed at a distance from the central line of said cargo space not smaller than the distance of the center of gravity of said cargo compartment (18) from the central line of said cargo space, whereby the lower part of said cargo compartment (18) can be moved outward aside with regard to said cargo space thus permitting the unloading of the material from said cargo compartment (18).

9. Method according to claim 8, **characterized** in that said cargo compartment (18) is tilted supported by such a pivot point (5, 6) that is located in the lower part of said cargo compartment (18) and is disposed at a distance from the central line of said cargo space not smaller than the distance of the center of gravity of said cargo compartment (18) from the central line of said cargo space, whereby the upper part of said cargo compartment (18) can be moved outward aside with regard to the roof (1) of said cargo space thus permitting the loading of the material to be transported into said cargo compartment (18).
